# EUROPEAN PATENT APPLICATION

(11) **EP 1 544 983 A1**
(43) Date of publication of application: **22.06.2005**
(21) Application number: 04029841.6
(22) Date of filing: 16.12.2004
(51) Int. Cl.: H02K 11/00

(54) **Electric motor**

(30) Priority: 19.12.2003 JP 2003422809
(71) Applicant: FANUC LTD, Minamitsuru-gun, Yamanashi 401-0597 (JP)
(72) Inventor: Horikoshi, Shinichi, Minamitsuru-gun Yamanashi 401-0511 (JP); Yamada, Yuuichi, Minamitsuru-gun Yamanashi 401-0511 (JP); Kimijima, Masami, Minamitsuru-gun Yamanashi 401-0511 (JP)
(74) Representative: Schmidt, Steffen J., Dipl.-Ing.

(57) **Abstract**

An electric motor (1) is driven by an inverter amplifier (2) through a cable (5). An absorber (3) is built in the electric motor (1) to suppress and absorb a surge voltage generated due to the surge impedance mismatch between the cable (5) and the electric motor (1) as well as a high-frequency noise generated due to the switching operation of a switching element in the inverter amplifier. The absorber (3) is made up of a plurality of conductors, each of which has a predetermined length and is covered with an insulating material. The conductors are connected to the input terminals (4a, 4b, 4c) of the electric motor (1), respectively. The forward end of each conductor of the absorber (3) is either open or connected to one or more other conductors through a member of a high impedance. The surge voltage and the high-frequency noise are suppressed and absorbed by the absorber.

## Description

### BACKGROUND OF THE INVENTION

### 1. Field of the Invention

The present invention relates to an electric motor driven by an inverter drive system.

### 2. Description of the Related Art

The winding of the electric motor has a high impedance, while the cable and the like for supplying power to the electric motor has an impedance lower than the electric motor. This impedance mismatching generates a high-voltage surge (an unrequired high-voltage waveform due to a mismatch reflection). The surge voltage causes the deterioration of the winding insulation of the electric motor.

In order to prevent such a deterioration of the winding insulation, a method has conventionally been used in which the surge voltage is reduced by adding to the electric motor a circuit consisting of a resistor, an inductance, a capacitor and the like or a circuit using one or more semiconductors, or an electric motor is employed which has an insulation performance which can sufficiently stand a high surge voltage.

In addition to these methods, Japanese Unexamined Patent Publication No. 2003-346571 proposes a structure for reducing the surge voltage, in which three insulated core wires are each shielded to make up independent three coaxial cores, while a single another wire is formed of a conductor as a GND line, and in which all these wires are twisted into a bunch and sheathed.

Further, the present applicant has already proposed a cable in which, in order to suppress the reflection-type surge voltage, an auxiliary wire formed of a conductor insulated by an insulating material and shielded is wound longitudinally around the main wire formed of the insulated core wires.

In the conventional method of reducing the surge voltage by adding to the electric motor a circuit consisting of a resistor, an inductance, a capacitor and the like or a circuit using a semiconductor, it is necessary to provide the electric motor with a circuit for suppressing the surge. Therefore, there are posed the problem of space and cost and another problem that high reliability is difficult to achieve. On the other hand, the electric motor having a sufficient insulation performance to stand the high surge voltage requires an increased amount of insulating paper for insulating the winding, and therefore the production cost of the electric motor is increased.

In the electric motor driven and controlled by an inverter drive system, the power from a DC power supply is supplied to the electric motor after being converted into the power at an arbitrary frequency by the switching operation of a switching element of an inverter. During this switching operation, however, high-frequency noise is generated and can cause a malfunction of external devices.

### SUMMARY OF THE INVENTION

Accordingly, it is an object of the present invention to provide an electric motor, of a simple structure, which absorbs the surge voltage and the high-frequency noises to prevent the deterioration of insulation.

According to the present invention, there is provided an electric motor, driven by an inverter drive system, which includes a built-in absorber having one end thereof connected to an input terminal of the electric motor for absorbing a surge voltage and a high-frequency noise. The absorber includes a conductor covered with an insulating material, and the other end of the conductor is open or connected to a load of a high impedance. The conductor covered with the insulating material may be shielded.

The conductor of the absorber covered with the insulating material is built into the electric motor by being wound into a stator slot of the electric motor together with a winding of the electric motor, or accommodated in a part such a terminal box or a connector for connecting the winding of the electric motor and the terminal of the electric motor to each other, or accommodated in the electric motor integrally with another component part such as a housing of the electric motor. Also, the absorber may include a terminal for detecting a voltage, a current change or a resistance of the absorber. Further, the insulating material for insulating the conductor of the absorber preferably is an insulating material having a high dielectric constant and/or a high dielectric loss. Furthermore, the conductor covered with the insulating material is preferably covered with a conductive material or a plating to increase the resistance and the inductance.

According to the present invention, the surge voltage and the high-frequency noise of the electric motor are suppressed and absorbed, so that the deterioration of the insulation of the electric motor windings can be prevented.

### BRIEF DESCRIPTION OF THE DRAWINGS

The above and other objects, features and advantages of the present invention will be described in more detail below based on the preferred embodiments of the present invention with reference to the accompanying drawings, wherein:
Fig. 1 is a diagram for explaining an embodiment of the present invention;
Fig. 2 is a sectional view of a first embodiment of an element making up an absorber shown in Fig. 1;
Fig. 3A is a sectional view of a second embodiment of the element making up the absorber shown in Fig. 1;
Fig. 3B is a sectional view showing a variation of the element shown in Fig. 3A;
Fig. 4A is a sectional view of a first embodiment of the absorber shown in Fig. 1 and including a bundle of wire members each constituting the element shown in Fig. 2;
Fig. 4B is a sectional view showing a variation of the absorber shown in Fig. 4A;
Fig. 5A is a sectional view of a second embodiment of the absorber shown in Fig. 1 and including a bundle of wire members each constituting the element shown in Fig. 3A; and
Fig. 5B is a sectional view showing a variation of the absorber shown in Fig. 5A.

### DETAILED DESCRIPTION

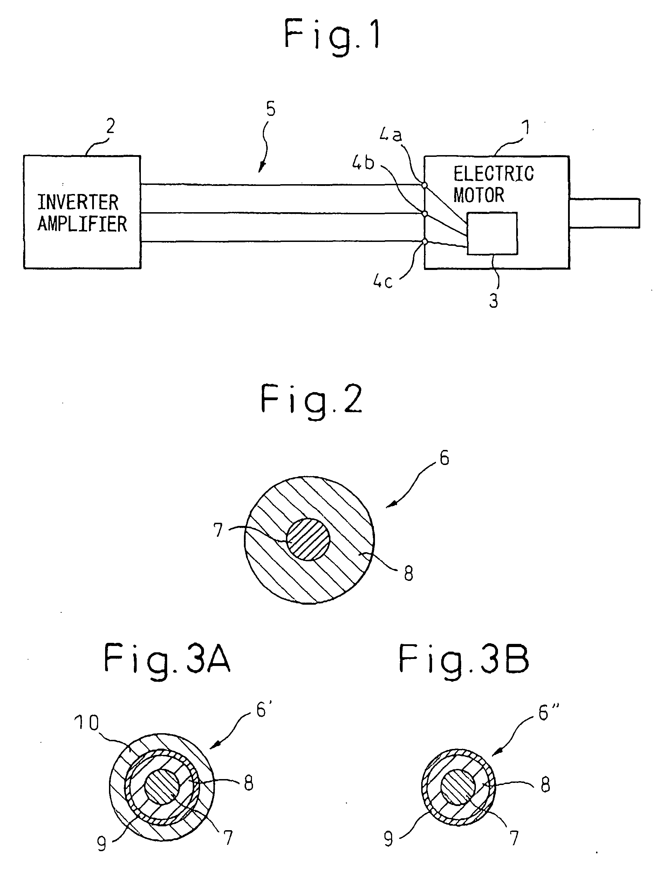

Fig. 1 is a diagram for explaining an embodiment of the present invention. An electric motor 1 has phase input terminals 4a, 4c, 4c, each of which is connected to an output of a corresponding phase of an inverter amplifier 2 through a cable 5. The electric motor 1 also has an absorber 3 built therein, which is connected to the phase input terminals. The absorber 3 is adapted to absorb a high-voltage surge generated due to the impedance mismatch between the cable and the electric motor as well as a noise such as a high-frequency noise generated due to the switching operation of a switching element in the inverter amplifier.

Fig. 2 shows a first embodiment of an element 6 making up the absorber 3. The absorber 3 is made up of a plurality of the elements 6. Each element 6 is a wire member of a predetermined length formed of a conductor 7 covered with an insulating material 8. One end of each element 6 is connected to corresponding phase input terminals, while the other end of each element 6 is open or connected to other end through a member of a high impedance. The insulating material 8 is preferably of an insulating material having a high dielectric constant and/or an insulating material having a high dielectric loss.

As each element 6 of the absorber 3 with one end thereof connected to the corresponding phase input terminal of the electric motor 1 has the other end thereof open or connected to one of the other elements through the high-impedance member, substantially no drive signal of the electric motor 1 passes through the elements 6 of the absorber 3, while the elements 6 can suppress and absorb the surge voltage generated due to the impedance mismatch between the cable 5 and the electric motor 1. The inverter amplifier 2 converts a direct current supplied from a DC power supply into an alternating current of an arbitrary frequency by a switching operation of the switching element thereof, and drives the electric motor 1 with the converted alternating current. A high-frequency noise is generated during the switching operation of the switching element. The absorber 3 suppresses and absorbs this high-frequency noise. In this way, the deterioration of the insulation of the motor winding due to the surge voltage and the malfunction of external devices due to the high-frequency noise are prevented.

The absorber 3 is accommodated in the electric motor 1 by winding the wire-like elements 6, each of which has the conductor 7 covered by the insulating material 8, into a stator slot of the electric motor together with a stator winding of the electric motor. As an alternative, the absorber 3 may be accommodated in a part such as a terminal box or a connector disposed in the electric motor 1 for connecting between the winding and the terminals.

As another alternative, an accommodating portion for accommodating the absorber 3 may be provided integrally with a part such as a housing of the electric motor 1 to accommodate a bundle of the elements 6 of the absorber 3 therein. In the case where the elements 6 making up the absorber 3 is accommodated as a bundle in this way, the whole wiring member, including the bundles of the elements 6, may be shielded.

Fig. 3A shows a second embodiment of the element making up the absorber 3, and Fig. 3B shows a variation of the element shown in Fig. 3A. Referring to Fig. 3A, the element 6' making up the absorber 3 according to the second embodiment is a wiring member of a predetermined length formed by applying a shield 9 around the insulating material 8 covering a conductor 7 and further applying a sheath 10 over the shield 9. Each element 6' has one end thereof connected to each of the phase input terminals of the electric motor 1 and makes up the absorber 3 for absorbing and suppressing the surge voltage and the high-frequency noise. In the element 6' shown in Fig. 3A, the shield 9 may be exposed without applying the sheath 10 over the shield 9, as an element 6" making up the absorber 3 shown in Fig. 3B.

The second embodiment and its variation of the element of making up the absorber are the same as the first embodiment thereof in the method of accommodating the elements 6', 6" in the electric motor 1 and in that the other end of each element 6', 6" is open or connected through the member of the high impedance. In the second embodiment and the variation thereof, the provision of the shield 9 can prevent the leakage of the surge voltage and the high-frequency noise, thereby making it possible. to suppress the surge voltage and the high-frequency noise more efficiently.

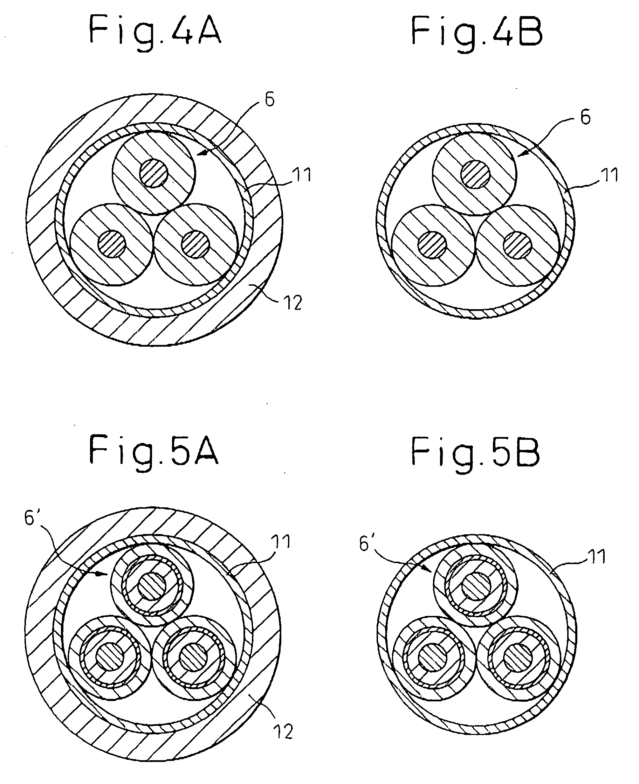

Fig. 4A shows a first embodiment of the absorber 3 shown in Fig. 1, and Fig. 4B shows a variation of the absorber shown in Fig. 4A. According to the embodiment shown in Fig. 4A, the absorber 3 is formed by bundling three elements 6 for three phases (the wiring members each formed of the conductor 7 covered with the insulating material 8) shown in Fig. 2 together, applying the shield 11 around the bundled elements 6, and applying a sheath 12 over the shield 11. One end of the conductor 7 of each element 6 is connected to the input terminal of the corresponding phase, and the other end thereof is open or connected to one of the other elements through the member of the high-impedance. However, in the absorber shown in Fig. 4A, the shield 11 bundling the three elements 6 (for three phases) together may be exposed without applying the sheath 12 over the shield 11, as the absorber shown in Fig. 4B.

Fig. 5A shows a second embodiment of the absorber 3 shown in Fig. 1, and Fig. 5B shows a variation of the absorber shown in Fig. 5A. According to the embodiment shown in Fig. 5A, the absorber 3 is formed by bundling three elements 6' for three phases (the wiring members each formed by covering the conductor 7 with the insulating material 8, applying the shield 9 around the insulating material 8, and applying the sheath 10 over the shield 9) shown in Fig. 3A together, applying a shield 11 around the bundled elements 6', and applying a sheath 12 over the shield 11. However, in the absorber shown in Fig. 5A, the shield 11 bundling the three elements 6' (for three phases) together may be exposed without applying the sheath 12 over the shield 11, as the absorber shown in Fig. 5B.

A conductive material or a surge suppression material covered with plating is used as the conductor 7 of the elements 6, 6' making up the absorber 3, for promoting the attenuation of the high-frequency noise and increasing the resistance and the inductance. A material having a larger conductor resistance and a larger complex permeability than copper, such as Ni (nickel) plating, is selected for a conductive material or a plating material. As an insulating material of high dielectric constant and high dielectric loss, on the other hand, vinylidene fluoride is used. The shield may be a commonly used braided one. Also, PVC or the like is used for the sheath.

The element 6 or 6' of the absorber 3 is about four times as long as a cable having a standard length and extending between the inverter amplifier 2 and the electric motor 1. In the case where a machine in which the electric motor 1 is used is determined and a positional relation between the inverter amplifier 2 and the motor 1, and therefore the length of the cable extending therebetween, is determined, the absorber 3 including the elements 6, 6' about four times as long as the cable having the above length is built in the electric motor 1.

The absorber 3 is degenerated after long use. In order to monitor the degree of such a degeneration or other thing, terminals for detecting the voltage, the current change and the resistance of the conductor 7 of the elements 6, 6' making up the absorber 3 are provided on the absorber 3. The voltage, the current change and the resistance of the conductor 7 as well as the temperature of the electric motor 1 are measured through these terminals. Based on these measurements, the degree of the degeneration of the absorber may be monitored and managed.

The surge voltage was measured for the electric motor 1 having the absorber 3 built therein according to the present invention on the one hand and the conventional electric motor not having the absorber 3 built therein on the other hand. In the electric motor having the absorber 3 built therein according to the present invention, the increase in the voltage under the effect of the surge voltage with respect to the voltage in the stable state free of the effect of the surge voltage was about 40 to 50 % less than the increase in the voltage of the conventional electric motor having no absorber 3 built therein. Thus, according to the present invention, the surge voltage can be reduced by 40 to 50 %, and therefore the deterioration of the insulation of the electric motor can be suppressed depending on the reduced surge voltage.

Although the present invention has been described with reference to the embodiments shown in the accompanying drawings, these embodiments are only illustrative and are not limitative. Accordingly, the scope of the present invention is only limited by the appended claims, and the preferred embodiments of the present invention may be modified or changed without departing from the scope of the claims.

## Claims

1. An electric motor (1) driven by an inverter drive system (2), said electric motor comprising an built-in absorber (3) having one end thereof connected to an input terminal (4a; 4b; 4c) of said electric motor for absorbing a surge voltage and a high-frequency noise.

2. The electric motor according to claim 1, wherein said absorber (3) comprises a conductor (7) covered with an insulating material (8) and the other end of said conductor is open.

3. The electric motor according to claim 1, wherein said absorber (3) comprises a conductor (7) covered with an insulating material (8) and the other end of said conductor is connected to a load of a high-impedance.

4. The electric motor according to claim 2 or 3, wherein said conductor (7) covered with the insulating material (8) is shielded.

5. The electric motor according to claim 2 or 3, wherein said conductor (7) of said absorber (3) covered with the insulating material (8) is built into said electric motor (1) by being wound into a stator slot of said electric motor together with a winding of said electric motor.

6. The electric motor according to claim 1, wherein said absorber (3) is accommodated in a part for connecting a winding of said electric motor (1) and a terminal of said electric motor to each other.

7. The electric motor according to claim 1, wherein said absorber (3) is accommodated in said electric motor (1) integrally with another component part of said electric motor.

8. The element motor according to claim 1, wherein said absorber (3) includes a terminal for detecting a voltage, a current change or a resistance of said absorber.

9. The electric motor according to claim 6 or 7, wherein the insulating material (8) comprises an insulating material having at least one of a high dielectric constant and a high dielectric loss.

10. The electric motor according to claim 6 or 7, wherein said conductor (7) covered by the insulating material (8) is covered by a conductive material or a plating to increase a resistance and an inductance.
